Europäisches Patentamt

European Patent Office

Office européen des brevets

(19)

(11) EP 0 612 408 B1

(12) EUROPÄISCHE PATENTSCHRIFT

(45) Veröffentlichungstag und Bekanntmachung des Hinweises auf die Patenterteilung:
22.01.1997 Patentblatt 1997/04

(21) Anmeldenummer: 92922453.3

(22) Anmeldetag: 26.10.1992

(51) Int Cl.6: G01N 27/403, G01N 27/406

(86) Internationale Anmeldenummer:
PCT/EP92/02445

(87) Internationale Veröffentlichungsnummer:
WO 93/10444 (27.05.1993 Gazette 1993/13)

(54) **ELEKTROCHEMISCHER SENSOR ZUR MESSUNG DER GASKONZENTRATION**

ELECTROCHEMICAL SENSOR FOR THE MEASUREMENT OF GAS CONCENTRATIONS

DETECTEUR ELECTROCHIMIQUE POUR LA MESURE DE LA CONCENTRATION DE GAZ

(84) Benannte Vertragsstaaten:
AT BE CH DE DK ES FR GB GR IE IT LI LU MC NL SE

(30) Priorität: 11.11.1991 DE 4137030

(43) Veröffentlichungstag der Anmeldung:
31.08.1994 Patentblatt 1994/35

(73) Patentinhaber: MST
MICRO-SENSOR-TECHNOLOGIE GMBH
D-82069 Hohenschäftlarn (DE)

(72) Erfinder: NIKOLSKAJA, Elena
St. Petersburg, 196233 (RU)

(74) Vertreter: Böhm, Brigitte, Dipl.-Chem. Dr.
Postfach 86 08 20
81635 München (DE)

(56) Entgegenhaltungen:
GB-A- 2 228 327          US-A- 4 639 306
US-A- 5 085 760

• PATENT ABSTRACTS OF JAPAN, Band 11, Nr.
340 (P-634) ; & JP-A-62 123 348

**Beschreibung**

Die vorliegende Erfindung betrifft einen elektrochemischen Sensor zur Bestimmung der Konzentration von Wasserstoff, Kohlenmonoxid und Silan, Fluor, Chlor, Brom, Jod, Sauerstoff, Schwefeldioxid, Methan, Ethan, Ethylen, Acetylen und anderen Gasen. Der Sensor kann u.a. zur Herstellung von tragbaren, netzunabhängigen und einfach zu bedienenden Geräten zur Messung und Überwachung der Gaskonzentration eingesetzt werden.

Gasanalysatoren zur kontinuierlichen Überwachung des umgebenden Mediums finden eine breite Anwendung auf vielen Gebieten, z.B. zur automatischen Kontrolle technologischer Prozesse, zum Explosionsschutz, zur ökologischen Kontrolle usw.. Solche Analysatoren können auf Basis von elektrochemischen Sensoren aufgebaut werden. Zur Messung und Überwachung der Gaskonzentration sind verschiedene Sensortypen bekannt.

Ein bekannter Sensortyp (N.I. Globa: "Razrabotka i issledovanie elektrochimicheskich datchikov konzentratsii kisloroda i vodoroda", Autoreferat der Dissertation, Leningrader Institut für Technologie 1985, S.11-14) enthält eine Meßelektrode und eine Gegenelektrode, die sich in einem Flüssigelektrolyten befinden. Die Meßelektrode besteht vollständig oder zum Teil aus einem katalytisch aktiven Material. Die Gegenelektrode wird aus einem elektrochemisch aktiven Material hergestellt, wobei die Wahl dieses Materials von dem zu bestimmenden Gas abhängt. Wenn das Material geringe elektrische Leifähigkeit hat, wird die Gegenelektrode aus einer Mischung dieses Materials und Kohlenstoff hergestellt, wobei Kohlenstoff die elektrische Leitfähigkeit erhöht. Die Gegenelektrode wird z.B. in einem Sauerstoff-Sensor aus Blei und in einem Wasserstoff-Sensor aus einer Mischung von Mangandioxid und Kohlenstoff hergestellt.

Wenn dem Sensor ein Gas zugeführt wird, dessen Konzentration zu bestimmen ist, findet eine elektrochemische Oxidation (für Blei) oder Reduktion (für Mangandioxid) des elektrochemisch aktiven Gegenelektrodenmaterials statt. Dieses aus 2 Elektroden bestehende System erzeugt in einem äußeren Leitkreis elektrischen Strom, dessen Größe proportional zur Gaskonzentration ist. Dieser Strom kann als Maß für die Gaskonzentration ausgewertet werden.

Bei den chemischen Reaktionen auf der Gegenelektrode wird das aktive Material (Blei oder Mangandioxid) verbraucht, was die Lebensdauer des Sensors begrenzt.

Eine Passivierung der Oberfläche der Gegenelektrode durch Produkte chemischer Reaktionen, die auf der Elektrode stattfinden sowie eine Diffusion von Reaktionsprodukten zur Meßelektrode können zur Verfälschung der Meßsignale führen, was eine geringe Zuverlässigkeit des Sensors zur Folge hat. Um diese Effekte zu vermindern, müssen Sensoren, die nach dem obigen Prinzip arbeiten, mit relativ großen Abmessungen und hohen Mengen an Material gebaut werden.

Ein anderer bekannter Sensor zur Messung der Gaskonzentration (JP-A-59-28358) enthält eine aus einem katalytisch aktiven Material hergestellte Meßelektrode, einen Elektrolyten und eine Gegenelektrode, die aus einer Mischung von Kohlenstoff und einer elektrochemisch aktiven organischen Substanz wie Chlorchinon oder monomerem und polymerem Eisen- und Kobaltphtalocyanin besteht. Die elektrochemisch aktive Substanz wirkt als Katalysator bei der elektrochemischen Reduktion von Sauerstoff.

Wenn das zu bestimmende Gas dem Sensor zugeführt wird, wird es auf der Meßelektrode oxidiert. Auf der Gegenelektrode erfolgt dementsprechend eine Reduktion von Luftsauerstoff bzw. von speziell zugeführtem Sauerstoff, die durch die aktiven Komponenten (Katalysatoren) ermöglicht wird. Während des Betriebes des Sensors werden die Katalysatoren abwechselnd reduziert und oxidiert. Diese beiden Reaktionen sind jedoch nicht absolut reversibel, was zum Verbrauch der Katalysatoren führt und die Lebensdauer des Sensors begrenzt. Weiterhin ist auch die Zuverlässigkeit des Sensors nur gering, da eine Passivierung der Oberfläche der Gegenelektrode durch die Produkte der Reduktion von Sauerstoff sowie eine Diffusion dieser Reaktionsprodukte zur Meßelektrode auftreten können. Ein weiterer Nachteil des Sensors ist die Möglichkeit des Austrocknens des Flüssigelektrolyten. Die Verwendung eines festen Elektrolyten in einem solchen Sensor ist jedoch aufgrund der Notwendigkeit, eine Vierphasen-Grenze "Kohlenstoff-Katalysator-Elektrolyt-Sauerstoff" zu erzeugen, ebenfalls mit großen Schwierigkeiten behaftet.

Eine weitere Beschränkung für den Einsatz von Sensoren des obigen Typs liegt darin begründet, daß ein derartiger Sensor über längere Zeit nur unter Sauerstoffzufuhr, d.h. in sauerstoffhaltigen Medien oder bei speziell bewirkter Sauerstoffzufuhr funktionieren kann. Ferner bewirkt die Verwendung von Flüssigelektrolyten eine geringe mechanische Beständigkeit des Sensors.

Ein früher von der gleichen Erfinderin entwickelter Sensor (Gebrauchsmuster Nr. 4700246/31-25 UdSSR, 1990) enthält eine Meßelektrode aus einem katalytisch aktiven Material, einen Elektrolyten und eine Gegenelektrode aus chemisch reinem Kohlenstoff mit einer spezifischen Oberfläche von 1.000 bis 1.700 $m^2$/g. Wenn der Sensor mit einem Gas in Kontakt kommt, dessen Konzentration zu bestimmen ist, wird das Gas an der Meßelektrode elektrochemisch ionisiert. An der Gegenelektrode läuft ein Aufladungsprozess der elektrischen Doppelschicht an der Grenze Kohlenstoff-Elektrolyt. Der resultierende und in einem äußeren Leitkreis gemessene elektrische Strom ist proportional zur Gaskonzentration und wird als Maß der Konzentration verwendet.

Da die Gegenelektrode selbst keine elektrochemisch aktiven Komponenten enthält, bestimmt sich die Lebensdauer des Sensors durch die Zeit der Aufladung der elektrischen Doppelschicht. Eine ausreichend lange Lebensdauer kann nur erreicht werden, wenn ein chemisch reiner Kohlenstoff mit großer spezifischer Oberfläche (größer als 1.000 $m^2/g$) verwendet wird. Jedoch auch in diesem Fall beträgt die Lebensdauer eines solchen Sensors mit Abmessungen, die für tragbare Geräte geeignet sind, nur etwa 2 Jahre.

Darüber hinaus ist die Herstellung von chemisch reinem Kohlenstoff für die Gegenelektrode schwierig, da bei der Synthese und der Aktivierung von Kohlenstoff sauerstoffhaltige Verbindungen auf der Oberfläche gebildet werden. Wegen des hohen Adsorptionsvermögens von Kohlenstoff ist es praktisch unmöglich, die Wechselwirkungen der Elektrolytkomponenten mit dem chemisch reinen Kohlenstoff zu vermeiden. Solche Wechselwirkungen können wiederum zur Änderung des Potentials der Gegenelektrode führen und die Signale verfälschen.

Der Erfindung liegt die Aufgabe zugrunde, einen elektrochemischen Sensor zur Messung der Gaskonzentration zu entwickeln, der sich durch möglichst hohe Zuverlässigkeit und Lebensdauer auszeichnet. Diese Aufgabe wird erfindungsgemäß mit dem im folgenden beschriebenen Sensor gelöst. Weitere Aufgaben ergeben sich aus der nachfolgenden Beschreibung.

Ein Gegenstand der Erfindung ist ein elektrochemischer Sensor zur Bestimmung der Konzentration eines Gases, umfassend ein Gehäuse (1), eine Meßelektrode (5), die ein katalytisch aktives Material enthält, welches eine Ionisierung des zu bestimmenden Gases herbeiführen kann, eine Gegenelektrode (3), die ein Kohlenstoffmaterial enthält, und einen Elektrolyten, der mit Meß- und Gegenelektrode in Kontakt steht, dadurch gekennzeichnet, daß das Kohlenstoffmaterial in der Gegenelektrode eine spezifische Oberfläche von mindestens 40 $m^2/g$ aufweist und elektrochemisch aktive Oberflächenverbindungen enthält, die reversibel oxidiert bzw. reduziert werden können.

Das katalytisch aktive Material der Meßelektrode ist ein Material, das einerseits gegen den Elektrolyten beständig sein muß und andererseits die Umsetzung des zu bestimmenden Gases katalysiert. Bei einer Vielzahl von Sensoren kann beispielsweise Platin das katalytisch aktive Material sein. Darüberhinaus kann das katalytisch aktive Material in einem Fluorsensor aus Kohlenstoff und in einem Sauerstoffsensor aus Gold hergestellt werden. Die Meßelektrode kann vollständig oder teilweise aus dem katalytisch aktiven Material bestehen, d.h. man kann beispielsweise einen Platindraht oder ein Platinnetz oder aber auch eine nur mit Platin beschichtete Elektrode verwenden.

Die Gegenelektrode des erfindungsgemäßen Sensors enthält ein Kohlenstoffmaterial, d.h. sie besteht vollständig oder aber auch nur teilweise aus dem oben bezeichneten Kohlenstoffmaterial. Bei den elektrochemisch aktiven Verbindungen auf der Oberfläche der Gegenelektrode handelt es sich im allgemeinen um sauerstoffhaltige Verbindungen, die während des Herstellungsprozesses des Kohlenstoffmaterials auf dessen Oberfläche gebildet werden. Derartige Verbindungen sind reversibel oxidierbar und reduzierbar. Beispielsweise handelt es sich dabei um Verbindungen des Hydrochinon/Chinon Typs.

Im erfindungsgemäßen Sensor erfolgt in der Gegenelektrode bei Stromdurchfluß eine Aufladung der elektrischen Doppelschicht an der Grenze Elektrode-Elektrolyt und dadurch bedingt eine reversible Reduktion oder Oxidation der elektrochemisch aktiven Verbindungen auf der Oberfläche der Gegenelektrode. Vorzugsweise ist das Kohlenstoffmaterial in der Gegenelektrode eine Aktivkohle mit sauerstoffhaltigen elektrochemisch aktiven Oberflächenverbindungen. Aufgrund der hohen spezifischen Oberfläche und der chemischen Eigenschaften von Aktivkohle sind die Kapazität der Gegenelektrode und die Anzahl der elektrochemisch aktiven Oberflächenverbindungen sehr hoch. Dadurch geht beim Betrieb des Sensors die Änderung des Potentials der Gegenelektrode nur sehr langsam vonstatten, so daß das Potential der Gegenelektrode über lange Zeit im Bereich der elektrochemischen Stabilität des Elektrolyten bleibt.

Bei Gaszufuhr findet an der Meßelektrode eine Umsetzung des zu bestimmenden Gases statt. An der Gegenelektrode erfolgt die Aufladung der Doppelschicht und es findet reversible Oxidation und Reduktion der Oberflächenverbindungen statt. Wenn die Elektroden über Kontakte an einen äußeren Leitkreis angeschlossen sind, kann ein im äußeren Leitkreis fließender Strom als Maß für die Gaskonzentration dienen.

Die Lebensdauer des erfindungsgemäßen Sensors hängt von der Doppelschichtkapazität und von der Anzahl der elektrochemisch aktiven Oberflächenverbindungen ab. Je größer daher die spezifische Oberfläche der Gegenelektrode ist, desto länger ist wiederum die Lebensdauer des Sensors.

Die elektrochemischen Eigenschaften der aktiven Oberflächenverbindungen der verwendeten Aktivkohle schließen die Möglichkeit einer Elektrodenpassivierung oder einer Diffusion der Reaktionsprodukte zur Meßelektrode aus. Dies führt zu einer hohen Zuverlässigkeit des Sensors.

Die Anwesenheit von Sauerstoff an der Gegenelektrode ist bei einem erfindungsgemäßen Sensor nicht notwendig, was wiederum die Anwendung in sauerstoffreien Medien ermöglicht sowie die Zuverlässigkeit und mechanische Beständigkeit des Sensors verbessert.

Die Anwesenheit von chemischen Oberflächenverbindungen im Kohlenstoffmaterial der Gegenelektrode, die reversibel oxidiert und reduziert werden können, führt zu einer starken Verlängerung der Lebensdauer des Sensors, ohne daß dessen Abmessungen und Gewicht erhöht werden müssen. Daher kann der erfindungsgemäße Sensor als tragbares, netzunabhängiges Gerät ausgebildet sein.

Da bei einem Kohlenstoffmaterial, das chemische Oberflächenverbindungen enthält, im allgemeinen keine chemischen Wechselwirkungen mit dem Elektrolyten auftreten, wird die Möglichkeit einer unvorhergesehenen Änderung des Gegenelektrodenpotentials ausgeschlossen, was wiederum die Zuverlässigkeit des Sensors erhöht.

Bereits die Anwendung von Aktivkohle mit kleiner spezifischer Oberfläche (z.B.: 40 $m^2$/g) und elektrochemisch aktiven Oberflächenverbindungen erlaubt die Herstellung von Sensoren mit ausreichend guten Charakteristiken. Die Anwendung von Aktivkohle mit großer spezifischer Oberfläche (1.000 - 3.000 $m^2$/g) ermöglicht die Herstellung von Sensoren mit sehr langer Lebensdauer, ohne daß eine Vergrößerung der Sensoren erforderlich ist.

Es ist vorteilhaft, wenn sich bei einem erfindungsgemäßen Sensor die Gegenelektrode in einer hermetisch abgeschlossenen Kammer befindet. Dadurch wird die Gegenelektrode vor einem Kontakt mit Verunreinigungen geschützt und folglich die Lebensdauer des Sensors erhöht. Es ist auch vorteilhaft, wenn der Elektrolyt eingebettet in einer festen Matrix vorliegt. Dies schließt die Möglichkeit eines Austrocknens des Elektrolyten aus und verlängert dadurch die Lebensdauer des Sensors. Darüber hinaus wird die mechanische Beständigkeit des Sensors erhöht. Das Einbetten eines Elektrolyten in eine feste Matrix kann beispielsweise dadurch erfolgen, daß dem Elektrolyten polymerisierbare Monomere (z.B. Methylmethacrylat) zugesetzt werden. Die Mischung aus Elektrolyt und Monomeren wird dann in flüssigem Zustand mit der Gegenelektrode in Kontakt gebracht. Anschließend kann eine Polymerisation der Monomeren erfolgen, wodurch ein fester Matrixblock gebildet wird, in welchen der Elektrolyt und die Gegenelektrode eingebettet sind.

In manchen Fällen, insbesondere bei einem engen Diffusionsgrenzstrombereich, kann es vorteilhaft sein, einen Sensor mit drei Elektroden zu verwenden. Ein derartiger Sensor enthält neben der Meßelektrode und der Gegenelektrode zusätzlich noch eine Referenzelektrode. Diese Referenzelektrode dient dazu, die Meßelektrode auf einem im wesentlichen konstanten Potential zu halten (d.h. im Diffusionsgrenzstrombereich). Die Referenzelektrode kann aus einem katalytisch aktiven Material hergestellt werden, z.B. aus dem selben Material wie die Meßelektrode. Weiterhin sollte die Referenzelektrode eine große Oberfläche aufweisen, um einer Polarisierung vorzubeugen. Die Referenzelektrode wird in den Elektrolyten eingesetzt, z.B. zwischen die Meß- und die Gegenelektrode. Bei Verwendung eines derartigen Sensors mit drei Elektroden finden auf der Meß- und der Gegenelektrode dieselben Prozesse wie bei einem Sensor mit nur zwei Elektroden statt.

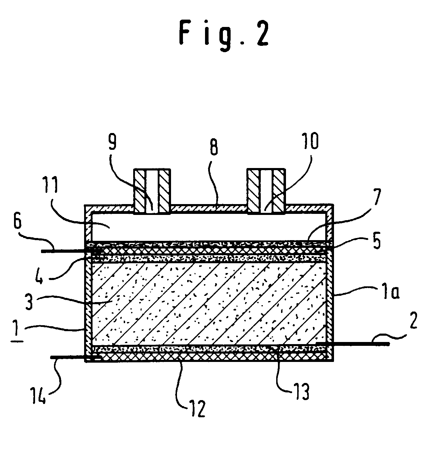

In einer weiteren bevorzugten Ausführungsform der Erfindung kann der Sensor weiterhin eine oder mehrere Zusatzelektroden enthalten. Die Verwendung einer derartigen Zusatzelektrode ermöglicht eine Regenerierung des Sensors während seines Betriebs durch Entladung der Gegenelektrode. Dabei wird zwischen der Gegenelektrode und der Zusatzelektrode eine solche Spannung angelegt, daß in der Gegenelektrode Prozesse ablaufen, die der beim normalen Sensorbetrieb stattfindenden Aufladung der Gegenelektrode entgegenwirken. Die Funktionsweise eines Sensors mit Zusatzelektrode ist im Zusammenhang mit der Erläuterung von Abb. 2 detailliert beschrieben.

In noch einer weiteren bevorzugten Ausführungsform der Erfindung kann der Sensor mehrere Meßelektroden, z. B. zwei Meßelektroden enthalten. Ein solcher Sensor ist ähnlich aufgebaut wie ein Sensor mit einer Zusatzeiektrode, nur daß anstelle der Zusatzelektrode eine zweite Meßelektrode mit einer Diffusionsmembran eingesetzt wird. Zwischen dieser Meßelektrode und der Gegenelektrode wird eine Spannung angelegt, die zur Konzentrationsmessung des zu bestimmenden Gases erforderlich ist. Die zweite Meßelektrode basiert auf dem selben Prinzip wie die erste Meßelektrode. Die Auswahl des katalytisch aktiven Materials und der Spannung entscheidet, welche Reaktion an der zweiten Meßelektrode erfolgt, d.h. insbesondere welches Gas umgesetzt wird.

Bei dieser Ausführungsform ist es vorteilhaft, wenn an einer der Meßelektroden die Oxidation eines zu bestimmenden Gases und an der zweiten Elektrode die Reduktion eines zweiten Gases stattfindet. In diesem Fall wird während des Betriebs der ersten Meßelektrode die Gegenelektrode aufgeladen und bei Betrieb der zweiten Meßelektrode wird die Gegenelektrode gleichzeitig entladen. Dies hat eine erhebliche Verlängerung der Lebensdauer des elektrochemischen Sensors zur Folge, da bei wechselndem oder/und gleichzeitigem Betrieb der Meßelektroden keine Aufladung der Gegenelektrode mehr stattfindet. Die zweite Meßelektrode dient somit gleichzeitig zur Messung einer zweiten Gaskonzentration und als Zusatzelektrode zur Entladung der Gegenelektrode.

Ein weiterer Gegenstand der vorliegenden Erfindung ist ein Verfahren zur Bestimmung der Konzentration eines oder mehrerer Gase, bei dem man einen erfindungsgemäßen elektrochemischen Sensor verwendet. Bei dem erfindungsgemäßen Verfahren lassen sich beliebige Gase bestimmen, vorausgesetzt daß sie an der katalytisch aktiven Meßelektrode umgesetzt werden können. Beispiele für geeignete Gase sind Wasserstoff, Fluor, Chlor, Brom, Iod, Sauerstoff, Schwefeldioxid, Silan, Kohlenmonoxid, Stickstoffdioxid, Methan, Ethan, Ethylen und Acetylen. Bevorzugte Gase sind Wasserstoff, Silan, Kohlenmonoxid oder Sauerstoff. Bei Verwendung von 2 Meßelektroden ist eine gleichzeitige Bestimmung von 2 unterschiedlichen Gasen (z.B. Wasserstoff und Sauerstoff) möglich.

In einer bevorzugten Ausführungsform erfolgt die Durchführung des erfindungsgemäßen Verfahrens, indem man den elektrochemischen Sensor über Kontakte an einen äußeren Leitkreis anschließt, zwischen den Elektroden des Sensors ein geeignetes äußeres Potential, beispielsweise 0,1 bis 0,6 Volt, einstellt und den zur Konzentration des zu bestimmenden Gases proportionalen Strom im äußeren Leitkreis mißt. Bei der Bestimmung von Wasserstoff verwendet man beispielsweise einen Sensor, der eine Meßelektrode aus Platin, eine Gegenelektrode aus Aktivkohle mit einer spezifischen Oberfläche von 1.000 - 1.700 $m^2$/g und einen Elektrolyten auf Basis einer starken Mineralsäure (z.B. $H_2SO_4$, $H_3PO_4$ etc.) enthält, wobei ein äußeres Potential zwischen den Elektroden von etwa 0,3 Volt eingestellt wird. Der Elektrolyt kann in einer festen Matrix eingebettet sein.

Ein weiterer Vorteil bei der Gasbestimmung mit Hilfe eines erfindungsgemäßen Sensors besteht darin, daß man den Sensor nach einer vorbestimmten Betriebsdauer durch Umkehrung der Elektrodenpolarisierung unter Anlegen einer äußeren Spannung wieder regenerieren kann. Ein weiterer Gegenstand der Erfindung ist ein Festelektrolyt, der sich insbesondere für die Verwendung in einem elektrochemischen Sensor speziell dem erfindungsgemäßen Sensor, eignet. Dieser Festelektrolyt besteht aus einem Polymerisat, in dem eine Elektrolytlösung inkorporiert ist. Zur Herstellung mischt man ein geeignetes polymerisierbares Monomer oder ein Monomerengemisch mit einem flüssigen Elektrolyten, beispielsweise einer wäßrigen oder wäßrig/organischen Lösung von Säuren, Salzen oder Basen, und führt die Polymerisation durch. Zur Polymerisation können die üblichen Hilfsstoffe wie Initiatoren, Katalysatoren, Vernetzer u.dgl. eingesetzt werden. Bevorzugt wird im Rahmen des erfindungsgemäßen Sensors ein Festelektrolyt der durch Polymerisation einer Mischung von Methylmethacrylat als Monomer, Azo-bis(isobutyronitril) als Initiator und einer Säure oder einem Gemisch von Säuren hergestellt wird. Geeignete Säuren sind beispielsweise Schwefelsäure, Trifluormethansulfonsäure und Phosphorsäure oder ein Gemisch davon.

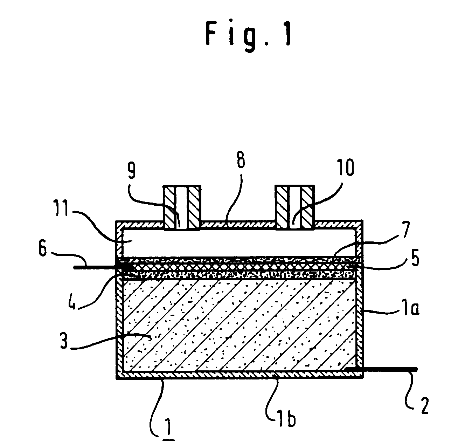

Im folgenden werden einige bevorzugte Formen des erfindungsgemäßen Sensors beschrieben. In der beiliegenden Abbildung 1 ist in schematischer Vereinfachung ein Vertikalschnitt durch eine erste Ausführungsform eines erfindungsgemäßen Sensors dargestellt. Wie in der Abbildung 1 gezeigt, enthält der Sensor ein Gehäuse 1 aus einem inerten dielektrischen Material wie z.B. Teflon oder Plexiglas.

Die Abmessungen des Gehäuses können z.B. 20 mm Durchmesser und 40 mm Höhe betragen. In der zylindrischen Seitenwand 1a des Gehäuses befinden sich zwei Öffnungen für Elektrodenkontakte (2,6). Der Kontaktdraht 2, der im fertigen Sensor als Kontaktierung der Gegenelektrode wirkt, wird auf den Boden 1b des Gehäuses gelegt und durch eine der Öffnungen hindurchgeführt. In das Gehäuse wird die Gegenelektrode 3 eingesetzt, die aus Aktivkohle mit elektrochemisch aktiven Oberflächenverbindungen hergestellt wird. Die spezifische Oberfläche der Gegenelektrode beträgt 1.000 m$^2$/g bis 1.700 m$^2$/g, d.h. ihre Porosität ist sehr hoch. Die Gegenelektrode wird mit dem flüssigen Elektrolyten getränkt. Der Elektrolyt, der aus einer Mischung von polymerisierbaren Monomeren wie z.B. Methylmethacrylat mit einem Polymerisationsinitiator wie z.B. Azo-bis(isobutyronitril) und einer ionisch leitfähigen Substanz (z.B. im Falle eines $H_2$-Sensors eine Säure) besteht, wird in das Gehäuse gegossen und etwa 30 Min. stehengelassen. In dieser Zeit kann die Flüssigkeit in die Poren der Gegenelektrode eindringen. Danach wird die Gegenelektrode mit einem Preßstempel angedrückt und das Gehäuse mit der Gegenelektrode in eine Heizvorrichtung gelegt. In der Heizvorrichtung findet bei einer jeweils geeigneten Temperatur (z.B. 120 °C) innerhalb eines geeigneten Zeitraumes (z.B. 2 Stunden) eine unvollständige Präpolymerisation statt, die zu einer Erhöhung der Viskosität des Elektrolyten führt. Das Ausmaß dieser Polymerisation kann durch die äußeren Bedingungen (Zeit, Temperatur, ggf. Druck), die Initiatorkonzentration und gegebenenfalls durch Zugabe eines Polymerisationshemmstoffes gesteuert werden. Im Gehäuse entsteht durch die Präpolymerisation ein "Block", der aus der Gegenelektrode, dem Elektrolyten und dem Kontaktdraht besteht. Anschließend wird das Gehäuse mit dem Gegenelektroden-Block aus der Heizvorrichtung herausgenommen und auf den Block wird ein Separator 4 aufgelegt. Der Separator hat die Form einer runden Scheibe mit einer Dicke von etwa 50 μm und einen Durchmesser, der dem Durchmesser des Gehäuses entspricht. Der Separator wird vorzugsweise aus einem porösen polymeren Material hergestellt, das gegen den verwendeten Elektrolyten beständig ist, z.B. aus Polypropylen.

Auf den Separator wird anschließend die Meßelektrode 5 aus einem katalytisch aktiven Material aufgelegt. Die Meßelektrode kann z.B. in Form eines Netzes aus Platin mit einer Dicke von etwa 50 μm und einem Durchmesser, der dem Durchmesser des Separators entspricht, hergestellt werden. Der mit der Meßelektrode in Verbindung stehende Kontaktdraht 6 wird durch eines der Löcher im Gehäuse hindurchgeführt. Der Separator und die Meßelektrode werden mit dem Gegenelektroden-Block zusammengepreßt, wodurch der Separator mit dem Elektrolyten durchtränkt und die Meßelektrode befeuchtet wird. Der so vorbereitete Sensor wird erneut in eine Heizvorrichtung gelegt, wo jetzt unter geeigneten Bedingungen (z.B. bei einer Temperatur von 110 °C innerhalb einer Stunde) eine vollständige Polymerisation des Elektrolyten stattfindet.

Danach wird auf die Meßelektrode eine gasdurchlässige Diffusionsmembran 7 aufgelegt, die vorzugsweise aus einem Polymer, z.B. aus Teflon, hergestellt wird. Die Membran soll dicht an der Elektrode liegen. Die Kappe 8, die auf das Gehäuse aufgesetzt wird, drückt die Membran an die Meßelektrode. Diese Kappe kann beispielsweise aus demselben Material wie das Gehäuse hergestellt werden. Die Kappe enthält Zutrittsöffnungen (9, 10) durch die das Gas in den Sensor gelangen kann. Die Kappe kann gegebenenfalls auch Befestigungen für Leitungen haben, durch die ein Gasstrom dem Sensor zuund vom Sensor abgeführt werden kann.

Zwischen der Kappe 8 und der Diffusionsmembran 7 befindet sich ein Gasraum 11. Die Kappe, die Membran und das Gehäuse werden fest verbunden, z.B. zusammengeklebt. Auf diese Weise befindet sich die Gegenelektrode in einer abgedichteten Kammer, die durch Gehäuse und Separator abgeschlossen wird. Die Kontaktdrähte werden an einen äußeren Leitkreis angeschlossen (nicht in der Abbildung dargestellt), der ein Amperometer und eine Spannungsquelle enthält.

Eine weitere mögliche Ausführungsform des Sensors enthält statt eines festen einen flüssigen Elektrolyten. In diesem Fall wird die Gegenelektrode mit dem Elektrolyten getränkt und dann wird in das Gehäuse eine starre poröse Membran eingelegt, die z.B. aus demselben Material wie das Gehäuse besteht. Auf diese Membran werden dann, wie in dem oben beschriebenen Sensor, ein Separator und die Meßelektrode aufgelegt. Eine Polymerisation in der Heizvorrichtung wird nicht durchgeführt. Ansonsten erfolgt die Herstellung des Sensors wie bei dem Sensor mit dem festen Elektrolyten.

Beim Betrieb des Sensors gelangt eine Gasmischung, die ein zu bestimmendes Gas enthält, durch die Öffnungen 9, 10 in den Gasraum 11 und diffundiert durch die Diffusionsmembran 7 zur Meßelektrode 5. Die Membran gewährleistet eine stabile Zufuhr der Gasmischung zur Meßelektrode. Das Potential der Meßelektrode kann so gewählt werden, daß nur das zu bestimmende Gas reagiert wird. Die äußere Spannungsquelle, an die die Kontaktdrähte angeschlossen werden, liefert die notwendige Potentialdifferenz bezüglich der Gegenelektrode 3.

Da sich das Potential der Gegenelektrode aufgrund ihrer hohen Kapazität nur sehr langsam ändert und die Potentialdifferenz konstant gehalten wird, ändert sich das Potential der Meßelektrode ebenfalls nur sehr langsam. Das Potential der Meßelektrode liegt im Grenzstrombereich der Umsetzung des Gases. Gas, das auf die Meßelektrode gelangt, wird umgesetzt, die im Elektrolyten im laufe der Umsetzung gebildeten Ionen wandern zur Oberfläche der Gegenelektrode. Dies führt zu Stromfluß im äußeren Leitkreis. Der Separator schließt einen elektrischen Kontakt der beiden Elektroden aus, läßt aber die Ionen durch. Infolge der Ladungswanderung zur Gegenelektrode findet eine Aufladung der elektrischen Doppelschicht an der Grenze Elektrolyt-Gegenelektrode statt. Die Ionen werden an der Oberfläche der Gegenelektrode adsorbiert.

Die Prozesse, die in der elektrischen Doppelschicht stattfinden, werden im Buch B.B. Damaskin, O.A. Petry "Vvedenie v elektrochimicheskuju kinetiku", 1975, Hochschule Moskau, S. 105-130, ausführlich beschrieben.

Bei der Doppelschichtaufladung ändert sich das Potential der Gegenelektrode. Wenn entsprechende Werte des Potentials erreicht werden, laufen auf der Oberfläche der Gegenelektrode Prozesse der reversiblen Oxidation oder Reduktion der chemischen Oberflächenverbindungen ab. Diese Prozesse werden in dem Buch von M.R. Tarasevitsch "Elektrochimia uglerodnych materialov", 1984, "Nauka" (Moskau), S. 253, beschrieben.

Der Strom im äußeren Leitkreis ist proportional zu der Konzentration des Gases, das an der Meßelektrode unter Bildung von Ionen umgesetzt wird. Bei Stromfluß vergrößert sich mit der Zeit die Ladung der elektrischen Doppelschicht und ändert sich das Potential der Gegenelektrode.

Die zulässige Änderung des Potentials wird durch die elektrochemische Stabilität des verwendeten Elektrolyten bestimmt. Wenn das Gegenelektrodenpotential das Potential der Elektrolytzersetzung übersteigt, ist der Strom im äußeren Leitkreis der Gaskonzentration nicht mehr proportional. Dies führt zur Verfälschung der Gaskonzentrationsbestimmung, d.h. die Bestimmung der Gaskonzentration ist möglich, solange das Gegenelektrodenpotential im zulässigen Bereich liegt. Die Lebensdauer des Sensors entspricht der Zeit, in der die Änderung des Gegenelektrodenpotentials die maximal zulässige Änderung nicht übersteigt.

Im folgenden wird die Lebensdauer des Sensors berechnet. Die Doppelschichtkapazität C entspricht der Ladung $q_C$, die auf der Gegenelektrode zugeführt werden muß, um ihr Potential um eine Einheit zu ändern:

$$C = \frac{q_C}{\varphi} \qquad (1)$$

Wenn auf der Gegenelektrode nur die Aufladung der Doppelschicht stattfindet, würde die Ladung, die durch den Strom I während der Zeit $t_C$ zugeführt wird, das Potential der Gegenelektrode um $\Delta$ verändern:

$$C = \frac{I \cdot t_c}{\Delta \varphi} \qquad (2)$$

Wenn $\Delta$ der maximal zulässigen Potential änderung entspricht und wenn nur die Doppelschichtaufladung stattfindet, ergibt sich die Lebensdauer des Sensors als:

$$t_C = \frac{c \cdot \Delta \varphi}{I} \qquad (3)$$

Die Doppelschichtkapazität ist proportional zu der Größe S der Oberfläche der Gegenelektrode ($C = K_C \times S$, wobei $K_C$ eine Proportionalitätskonstante ist) und die Formel 3 ergibt:

$$t_C = \frac{K_C \cdot S \cdot \Delta}{I} \qquad (4)$$

Auf der Gegenelektrode laufen überdies Prozesse reversibler Reduktion oder Oxidation chemischer Oberflächenverbindungen ab. Diese Prozesse (Faraday-Prozesse) werden durch Faradaysche Gesetze beschrieben:

$$q_f \times K_f = \Delta m \qquad (5)$$

Dabei ist:

$\Delta m$ - die umgesetzte Menge des Stoffes

$K_f$ - Proportionalitätskonstante

$q_f$ - die Ladungsmenge, die für die Reduktion oder Oxidation verbraucht wurde

Die Ladungsmenge $q_f$ ergibt sich durch den Strom I und die Zeit, in der die Faraday-Prozesse ablaufen: $q_f = I \times t_f$. Dies ergibt:

$$I \times t_f \times K_f = \Delta m \qquad (6)$$

Auf der Gegenelektrode befinden sich unterschiedliche Oberflächenverbindungen, denen verschiedene Werte des Potentials der Reduktion oder Oxidation entsprechen. Diese Werte liegen im zulässigen Potentialbereich $\Delta$. Die Faradaysche Kapazität (die Kapazität der Elektrode, die mit dem Ablauf der Faradayschen Prozesse verbunden ist) ist um Größenordnungen höher als die Doppelschichtkapazität. Darum läuft die Änderung des Gegenelektrodenpotentials bei Reduktion oder Oxidation der Oberflächenverbindung viel langsamer ab, als wenn nur eine Doppelschichtaufladung stattfindet. In manchen Bereichen der Aufladungskurve (die Abhängigkeit des Potentials von der zugeführten Ladungsmenge) bleibt das Potential über einige Zeit praktisch unverändert. Die Faradayschen Prozesse führen dazu, daß das Gegenelektrodenpotential viel länger im zulässigen Bereich bleibt und sich die Lebensdauer des Sensors stark verlängert.

Nachdem eine bestimmte Oberflächenverbindung vollständig reduziert oder oxidiert worden ist, beginnt das Potential sich erneut nach der Gleichung (2) zu verändern, bis ein Wert erreicht wird, bei dem eine andere Oberflächenverbindung reduziert oder oxidiert wird.

Das Potential der Gegenelektrode ändert sich also nach Gleichung (2) mit Unterbrechungen, die durch Faradaysche Prozesse verursacht werden.

Für eine Oberflächenverbindung i gilt:

$$I \times t_{fi} \times K_{fi} = \Delta m_i \qquad (7)$$

wobei:

$t_{fi}$ - Zeit für die Reduktion oder Oxidation der Oberflächenverbindung i

$K_{fi}$ - Proportionalitätskonstante für die Oberflächenverbindung i

$\Delta m_i$ - die umgesetzte Menge der Oberflächenverbindung i

Die gesamte Zeit, in der Faradaysche Prozesse ablaufen, ergibt sich als:

$$\sum_i t_{fi} = \sum_i \frac{\Delta m_i}{I \cdot K_{fi}} = \frac{1}{I} \sum_i \frac{\Delta m_i}{K_{fi}} \qquad (8)$$

Die Menge der Oberflächenverbindungen ist proportional zu der Oberfläche S der Gegenelektrode:

$$\Delta\, m_i = K_i \times S \tag{9}$$

Dies ergibt:

$$\Sigma\, t_{f\,i} = \frac{1}{I} \Sigma_i \frac{K_i \cdot S}{K_{f\,i}} \approx \frac{S}{I} \Sigma_i \frac{K_i}{K_{f\,i}} \tag{10}$$

Die Lebensdauer t des Sensors entspricht der Summe:

$$t = t_C + t_{fi} \tag{11}$$

Dies ergibt:

$$t = \frac{K_C \cdot S \cdot \Delta}{I} + \frac{S}{I} \Sigma_i \frac{K_i}{K_{f\,i}} = \frac{S}{I} \left( K_C \cdot \Delta\varphi + \Sigma_i \frac{K_i}{K_{f\,i}} \right) \tag{12}$$

Die Lebensdauer des Sensors ist umso länger, je größer die Oberfläche der Gegenelektrode, die zulässige Änderung des Potentials, die Menge der Oberflächenverbindungen und je kleiner der Strom ist, der durch die Elektrode fließt.

Die Stärke des Stroms kann durch die Auswahl der Materialien, der Konstruktion und der Lage der Membran 7 sowie der Meßelektrode 5 entsprechend eingestellt werden. Diese Parameter müssen so ausgewählt werden, daß die notwendige Genauigkeit der Messung und der entsprechende Meßbereich gewährleistet werden. Meistens liegt der Strom im Bereich von $\mu A$.

Die zulässige Änderung des Gegenelektrodenpotentials hängt von der elektrochemischen Stabilität des Elektrolyten ab. Für die verwendeten Festelektrolyte beträgt diese Änderung 0,4 bis 0,6 V.

Die Oberfläche der Gegenelektrode bei einer spezifischen Oberfläche der Aktivkohle von 1.000 - 1.700 $m^2/g$ und einem Gewicht der Gegenelektrode von etwa 10 g ist sehr groß und erreicht mehrere Tausend $m^2$. Eine solche Oberfläche ergibt eine sehr hohe Doppelschichtkapazität (mehrere Tausend Farad [F]), z.B. für Aktivkohle mit einer spezifischen Oberfläche von 1.500 $m^2/g$ beträgt die spezifische Kapazität 400 F/g.

Für eine Gegenelektrode aus 10 g Aktivkohle, eine zulässige Potentialänderung von 0,4 V und einen Strom von 20 $\mu A$ ergibt sich nach der Gleichung 3:

$$t_C = \frac{400 \times 10 \times 0,4}{20 \cdot 10^{-6}} = 80 \times 10^6\ s \approx 20.000\ h$$

Die Menge der chemischen Oberflächenverbindungen kann abgeschätzt werden. Nach M.R. Tarasevitsch ("Elektrochimia uglerodnych materialov", 1984, Nauka, Moskau, S. 35) beträgt der maximale Sauerstoffgehalt in der Aktivkohle 0,5 bis 3 mmol/g. Sauerstoff befindet sich auf der Oberfläche der Aktivkohle u. a. in Form von Verbindungen wie Chinon-Hydrochinon, was durch die experimentell bestimmte und in der Literatur bekannte (Katalog der Firma NEC, Japan, 1982) Reversibilität der elektrochemischen Prozesse auf der Oberfläche der Aktivkohle im verwendeten Potentialbereich erwiesen ist. Indem angenommen wird, daß etwa die Hälfte der Sauerstoffmenge in solchen Verbindungen enthalten ist, kann die Menge dieser Verbindungen als maximal etwa 3 mmol/g der Aktivkohle berechnet werden (die funktionelle Gruppe von Chinonen enthält ein Sauerstoffatom). Da die Reduktion oder Oxidation der funktionellen

8

Gruppe der Verbindungen vom Typ Chinon-Hydrochinon mit der Übertragung eines Elektrons verbunden ist, beträgt die Ladungsmenge, die für die Reduktion oder Oxidation solcher Verbindungen notwendig ist:

$$q_f = 26, 8 \text{ A x h mol}^{-1} \text{ x 3 x } 10^{-3} \text{ mol/g} = 0,08 \text{ A x h/g}$$

Aus $q_f = t_f \text{ x } I$ ergibt sich

$$t_f = \frac{q_f}{I} \qquad (13)$$

also ist für das obige Beispiel (bei einem Gewicht der Elektrode = 10 g)

$$t_f = \frac{0,08 \cdot 10}{20 \cdot 10^{-6}} = 40.000 \text{ h}$$

Nach Gleichung (11) gilt:

$$t = t_C + t_f = 20.000 + 40.000 = 60.000 \text{ h}$$

d.h. mehr als 6 Jahre.

Wenn die spezifische Oberfläche der Kohle 2.000 $m^2$/g beträgt, ergibt sich aus einer solchen Abschätzung die Lebensdauer von etwa 80.000 Stunden, d.h. etwa 9 Jahre.

Die Anwendung von Aktivkohle mit einer größeren spezifischen Oberfläche verlängert die Lebensdauer des Sensors, ist aber mit höheren Kosten verbunden. Die maximal bekannte spezifische Oberfläche der Aktivkohle beträgt etwa 3.000 $m^2$/g (B. Elwin, S. Stail "Nositeli i naniesiennyie katalisatory. Teoria i praktika", 1991, Chimia, Moskau, S. 111).

Die Anwendung von Aktivkohle mit einer spezifischen Oberfläche von 40 bis 1.000 $m^2$/g liefert Sensoren mit einer Lebensdauer, die der Lebensdauer der meisten bekannten Sensoren entspricht (etwa 1 Jahr). Beispielsweise hat die Gegenelektrode aus Aktivkohle mit einer spezifischen Oberfläche von 40 $m^2$/g und einem Gewicht von 50 g eine Lebensdauer von etwa 8.000 Stunden (etwas weniger als 1 Jahr).

Die elektrochemischen Eigenschaften der chemischen Oberflächenverbindungen schließen die Möglichkeit der Passivierung der Gegenelektrode und der Diffusion der Reaktionsprodukte zur Meßelektrode aus, was die Zuverlässigkeit des Sensors gewährleistet. Die elektrochemischen Reaktionen, an denen die chemischen Oberflächenverbindungen beteiligt sind, sind reversibel.

Ein bekanntes System, der sogenannte Superkondensator (Katalog der Firma Nippon Electric Company, Japan, 1982), enthält zwei Elektroden aus Aktivkohle und wird als Kondensator mit sehr hoher Kapazität verwendet. In diesem System laufen an beiden Elektroden dieselben Prozesse ab, die oben für die Gegenelektrode des Sensors beschrieben wurden. Der Kondensator hat aufgrund der Reversibilität der elektrochemischen Prozesse an den Aktivkohle-Elektroden und der folglich unbegrenzten Zahl an Zyklen "Aufladung-Entladung" eine unbegrenzte Lebensdauer. Es wurden 1.500 Zyklen ohne Veränderung des Parameters erzielt.

Entsprechend der Daten aus der Literatur und von Experimenten können die erfindungsgemäßen Sensoren nach Ablauf der Lebensdauer regeneriert werden, indem man die Polarisierung der Elektroden umkehrt unter Anlegung einer äußeren Spannung. Dann laufen auf beiden Elektroden des Sensors die umgekehrten Reaktionen zu den oben beschriebenen elektrochemischen Reaktionen ab.

In einem Wasserstoff-Sensor entsteht z.B. bei einer Polarisationsumkehr an der Meßelektrode Wasserstoff aus Protonen des Elektrolyten ($2H^+ + 2e^- \rightarrow H_2$). An der Gegenelektrode läuft die Entladung der elektrochemischen Doppelschicht und eine Oxidation der bei der Sensoranwendung reduzierten bzw. eine Reduktion der oxidierten chemischen Oberflächenverbindungen ab. Wenn die Ladungsmenge, die in umgekehrter Richtung verläuft, der Ladungsmenge entspricht, die während der Betriebszeit des Sensors verlief, befindet sich die Gegenelektrode wieder im Anfangszustand bezüglich der Ladung und des Potentials. An der Meßelektrode entsteht während des Aufladungsprozesses die Menge an Wasserstoff, die der bei dem Betrieb umgesetzten Wasserstoffmenge entspricht.

Der Sensor kehrt in seinen Ausgangszustand zurück und kann erneut zur Bestimmung von Wasserstoffkonzentrationen verwendet werden.

Da die Prozesse auf der Meßelektrode im Wasserstoff-Sensor reversibel sind, ist die Zahl der Zyklen "Betrieb-Regenerierung" theoretisch unbegrenzt, d.h. die theoretische Lebensdauer des Sensors ist auch unbegrenzt, wenn er immer wieder regeneriert wird. Da die Gegenelektrode mindestens 1.500 Zyklen "Betrieb-Regenerierung" aushält, wird die Möglichkeit der Regenerierung des Sensors durch die Meßelektrode bestimmt. Beispielsweise beträgt die Zahl der Zyklen für einen Sauerstoff-Sensor etwa 50.

Die Möglichkeit der Regenerierung des Sensors verlängert seine Lebensdauer sehr stark im Vergleich zu allen bekannten elektrochemischen Gassensoren. Im erfindungsgemäßen Sensor ist es daher vorteilhaft, wenn der Elektrolyt die Ionenspezies enthält, die auch bei der Gasumsetzung an der Meßelektrode entstehen. Bei Anwendung eines solchen Elektrolyten wird die Zusammensetzung und die Konzentration des Elektrolyten praktisch nicht verändert. Es wird z.B. ein Elektrolyt, der Protonen enthält, im Wasserstoff-Sensor verwendet ($H_2$ --> $2 H^+ + 2e^-$), ein Elektrolyt, der Fluorionen enthält, wird im Fluor-Sensor verwendet ($F_2 + 2e^-$ --> $2F^-$), ein Elektrolyt, der Chlorionen enthält wird im Chlor-Sensor verwendet ($Cl_2 + 2e^-$ --> $2Cl^-$).

Es können auch andere Elektrolyte verwendet werden, z.B. ein Elektrolyt, der $F^-$-Ionen enthält, zur Bestimmung von Chlorkonzentration. Dies führt jedoch zu einer Veränderung der Elektrolytzusammensetzung bei der Gasumsetzung und kann in einer Verkürzung der Sensorlebensdauer und einer Verfälschung der Signale infolge der Änderung des Gleichgewichtspotentials der Meßelektrode resultieren.

Abbildung 2 stellt eine zweite Ausführungsform des erfindungsgemäßen Sensors dar, der neben der Meß- und der Gegenelektrode noch eine Zusatzelektrode enthält. In diesem Fall kann eine Regenerierung des Sensors stattfinden, während er in Betrieb ist. Dabei entspricht die Bedeutung der Referenzzeichen in Abbildung 2 derjenigen in Abbildung 1.

Das Gehäuse des Sensors in Abbildung 2 enthält keine Rückwand (1b in Abbildung 1). Stattdessen enthält der Sensor eine Zusatzelektrode 12, die durch einen Separator 13 von der Gegenelektrode getrennt ist. Die Zusatzelektrode kann aus einem katalytisch aktiven Material hergestellt werden (z.B. Platinnetz). Der Kontaktdraht 14 wirkt als Kontaktierung der Zusatzelektrode. Beim Betrieb des Sensors wird zwischen der Gegenelektrode und der Zusatzelektrode eine Spannung angelegt. Die Messung der Gaskonzentration verläuft wie für einen Sensor ohne Zusatzelektrode beschrieben wurde. Die Zusatzelektrode sorgt für eine Regenerierung des Sensors während seines Betriebs. Zu diesem Zweck wird die Spannung zwischen der Zusatzelektrode und der Gegenelektrode so ausgewählt, daß in der Gegenelektrode Prozesse ablaufen, die zu denen beim normalen Sensorbetrieb (in Zusammenhang mit der Meßelektrode) gegenläufig sind. Wenn beispielsweise die Gegenelektrode gegenüber der Meßelektrode als Kathode wirkt, so daß beim Sensorbetrieb die Prozesse der Aufladung der elektrischen Doppelschicht und der Reduktion der Oberflächenverbindungen ablaufen, wirkt die Gegenelektrode gegenüber der Zusatzelektrode als Anode, so daß gleichzeitig eine Entladung der elektrischen Doppelschicht und eine Oxidation der Oberflächenverbindungen auf der Gegenelektrode stattfindet. An der Zusatzelektrode erfolgt dabei eine elektrochemische Reaktion, z.B. eine Reduktion von Sauerstoff aus der Luft oder eine Wasserstoffentwicklung aus dem Elektrolyten. Die Geschwindigkeit dieser Prozesse hängt von der Spannung zwischen Zusatzelektrode und Gegenelektrode ab. Dabei wird die Spannung günstigerweise so ausgewählt, daß der zwischen diesen Elektroden im äußeren Leiterkreis fließende Strom den gleichen Wert (aber eine umgekehrte Richtung) wie der mittlere Strom aufweist, der zwischen der Meßelektrode und der Gegenelektrode fließt.

Auf diese Weise findet während des Sensorbetriebs gleichzeitig eine Aufladung und eine Entladung der Gegenelektrode statt. Dies führt zu einer ganz erheblichen Verlängerung der Sensorlebensdauer. Diese Lebensdauer wird durch die zulässige Änderung des Gegenelektrodenpotentials bestimmt. Durch Verwendung der Zusatzelektrode ändert sich das Potential der Gegenelektrode viel langsamer. Die Lebensdauer eines solchen Sensors mit Zusatzelektrode wird durch die mögliche Änderung der Elektrolytzusammensetzung bei den elektrochemischen Reaktionen begrenzt, die an der Meß- und Zusatzelektrode ablaufen. In manchen Fällen jedoch ist die Lebensdauer eines solchen Sensors theoretisch unbegrenzt, z.B. wenn in einem Wasserstoffsensor auf der Zusatzelektrode Wasserstoffentwicklung stattfindet, ändert sich die Zusammensetzung des Elektrolyten nicht. In einem derartigen Sensor laufen folgende Reaktionen ab:

an der Meßelektrode:

$$H_2 \text{ ---> } 2H^+ + 2e^-$$

an der Zusatzelektrode

$$2H^+ + 2e^- \text{ --> } H_2$$

Durch Einführung der Zusatzelektrode kann die Lebensdauer des Sensors verlängert oder/und die Abmessungen des Sensors (die Menge der Aktivkohle) reduziert werden, ohne daß sich dies nachteilig auf die Lebensdauer des Sensors auswirkt.

Die Erfindung wird weiterhin durch die folgenden Beispiele verdeutlicht.

BEISPIEL 1

Ein erfindungsgemäßer Wasserstoff-Sensor wurde hergestellt und getestet. Das Sensorgehäuse wurde aus Polyethylen hergestellt. Die Gegenelektrode wurde aus Aktivkohlegewebe mit einer Dicke von 30 µm und einer spezifischen Oberfläche von 1.500 m²/g bereitet. Die Gegenelektrode hatte einen Durchmesser von 20 mm. Das Gesamtgewicht der Elektrode betrug 2,3 g. Die Meßelektrode wurde aus einem Platin-Netz hergestellt und hatte einen Durchmesser von 19 mm. Der Separator wurde aus Polypropylen vorbereitet. Es wurde ein Flüssigelektrolyt (38%-Schwefelsäure) verwendet. Als Diffusionsmembran wurde Polyethylen-Folie mit einer Dicke von 20 µm eingesetzt. Der Sensor hatte einen Innendurchmesser von 24 mm, eine Höhe von 20 mm und ein Gewicht von 3 g. In den äußeren Leitkreis wurden ein Mikroamperometer und eine Spannungsquelle eingeschlossen. Die zulässige Änderung des Gegenelektrodenpotentials in dem Elektrolyten betrug 0,4 V.

Zum Begasen wurde eine Gasmischung von Wasserstoff und Stickstoff verwendet.

Die Wasserstoffkonzentration war bekannt und betrug bis zu 48 %. Bei einer $H_2$-Konzentration von 4% und der Polarisationsspannung von +0,3 V (die Meßelektrode bezüglich der Gegenelektrode) betrug der Strom 10 µA. Bei der spezifischen Oberfläche der Aktivkohle von 1.500 m²/g betrug die spezifische Kapazität etwa 400 F/g, was nach den Gleichungen 3, 11, 13 die Abschätzung der Lebensdauer t ermöglicht:

$$t = \frac{400 \cdot 2,3}{10 \cdot 10^{-6} \cdot 3600} + \frac{0,08 \cdot 2,3}{10 \cdot 10^{-6}} \approx 10.000 \text{ h} + 18.400 \text{ h} = 28.400 \text{ h}$$

d.h. mehr als 3 Jahre.

Es wurde weiterhin ein erfindungsgemäßer Wasserstoff-Sensor mit einer festen Elektrolytenmatrix hergestellt und getestet. Das Gehäuse wurde aus Polymethylmetacrylat (Plexiglas) hergestellt. Für die Gegenelektrode wurde Aktivkohlepulver mit einer spezifischen Oberfläche von über 1.500 m²/g verwendet. Das Gewicht der Gegenelektrode betrug 1,8 g. Der Festelektrolyt wurde aus einer Mischung von Methylacrylat als Monomer, Azo-bis(isobutyronitril) als Initiator und Schwefelsäure (38 %) durch Polymerisation bei erhöhter Temperatur hergestellt. Die Meßelektrode, der Separator und die Membran wurden wie bei dem oben beschriebenen Sensor hergestellt. Die zulässige Änderung des Gegenelektrodenpotentials im verwendeten Festelektrolyten betrug 0,6 V. Bei der Wasserstoff-Konzentration von 4 % und der Polarisationsspannung von +0,3 V betrug der Strom 12 µA. Die Lebensdauer des Sensors wurde abgeschätzt:

$$t = \frac{400 \cdot 2,3 \cdot 0,4}{10 \cdot 10^{-6} \cdot 3600} + \frac{0,08 \cdot 2,3}{10 \cdot 10^{-6}} \approx 10.000 \text{ h} + 12.000 \text{ h} = 22.000 \text{ h}$$

d.h. etwa 2,5 Jahre.

Nach 500 Stunden der Begasung wurde eine Regenerierung des Sensors durchgeführt, indem die Richtung der Polarisationsspannung umgedreht wurde.

BEISPIEL 2

Es wurde ein erfindungsgemäßer Sensor mit Meß-, Gegen- und einer Referenzelektrode zur Messung der Kohlenmonoxid-Konzentration hergestellt und getestet. Der Sensor enthält einen festen Elektrolyten, eine Meßelektrode, eine Gegenelektrode und eine Referenzelektrode. Der Festelektrolyt wurde aus einer Mischung von Methylmethacrylat als Monomer, Azo-bis-(isobutyronitril) als Initiator und Phosphorsäure durch Polymerisation bei erhöhter Temperatur hergestellt. Die Meßelektrode und die Referenzelektrode wurden aus einer mit Platinmohr beschichteten Teflonmembran hergestellt. Die Gegenelektrode und der Separator wurden dann, wie in Beispiel 1 beschrieben, vorbereitet. Die Referenzelektrode befindet sich zwischen der Meßelektrode und der Gegenelektrode und ist von beiden durch einen Separator getrennt. Die zulässige Änderung des Gegenelektrodenpotentials betrug in dem verwendeten Elektrolyten 0,4 V. Das Potential der Meßelektrode wurde durch eine potentiostatische Schaltung gegenüber dem Potential der Referenzelektrode konstant gehalten. Bei der verwendeten Vorspannung (Potentialdifferenz zwischen der Meß- und der Referenzelektrode) von 0,1 V und einer CO-Konzentration von 30 ppm in der Luft betrug der Sensorstrom ca. 1,5 µA. Die Lebensdauer des Sensors wurde entsprechend Beispiel 1 wie folgt abgeschätzt:

$$t = \frac{400 \cdot 2{,}3 \cdot 0{,}4}{1{,}5 \cdot 10^{-6} \cdot 3600} + \frac{0{,}08 \cdot 2{,}3}{1{,}5 \cdot 10^{-6}} = 68000 \text{ h} + 120000 \text{ h} = = 188000 \text{ h} > 20 \text{ Jahre}$$

BEISPIEL 3

Es wurde ein erfindungsgemäßer Wasserstoff sensor mit einer Zusatzelektrode hergestellt und getestet. Der Sensor enthält eine Meßelektrode, eine Gegenelektrode und einen Festelektrolyten, die wie in Beispiel 2 hergestellt wurden. Als Zusatzelektrode wurde ein Platinnetz verwendet. Bei der verwendeten Vorspannung von -0,25 V zwischen der Meß- und Gegenelektrode und bei einer Wasserstoffkonzentration von 200 ppm fließt im äußeren Leiterkreis ein kathodischer (bezüglich der Gegenelektrode) Strom von -550 nA. Zwischen der Zusatz- und der Gegenelektrode wurde eine Spannung von +0,15 V angelegt, wodurch ein anodischer (bezüglich der Gegenelektrode) Strom von 500 nA fließt. Bei diesem Sensor erfolgt somit parallel eine Aufladung und eine gleichzeitige Entladung der Gegenelektrode. Die Zusammensetzung des Elektrolyten ändert sich nicht, so daß die Lebensdauer eines solchen Sensors theoretisch unbegrenzt ist.

BEISPIEL 4

Es wurde ein erfindungsgemäßer Sensor mit zwei Meßelektroden hergestellt und getestet. An einer der Meßelektroden wird die Konzentration von Wasserstoff, an der zweiten Meßelektrode wird die Konzentration von Sauerstoff bestimmt. Der Sensor enthält den in Beispiel 2 beschriebenen Festelektrolyten. Als Diffusionsmembran wurde eine Polyethylenfolie mit einer Dicke von 20 µm für die Wasserstoffmeßelektrode und 30 µm für die Sauerstoffmeßelektrode verwendet. Bei der angelegten Spannung von +0,3 V zwischen der Wasserstoffmeßelektrode und der Gegenelektrode und einer $H_2$-Konzentration von 400 ppm fließt im äußeren Leiterkreis ein Strom von 4,5 µA. Bei einer Spannung von -0,2 V zwischen der Sauerstoffmeßelektrode und der Gegenelektrode und bei einer Sauerstoffkonzentration von etwa 20,8 % fließt im äußeren Leiterkreis ein Strom von ca. 5 µA. Auf diese Weise findet parallel eine Aufladung und eine Entladung der Gegenelektrode statt. Der effektive Strom, der eine Aufladung der Gegenelektrode verursacht, wird aus einer Differenz dieser beiden Ströme gebildet und beträgt 5 µA - 4,5 µA = 0,5 µA, da die mit der Oxidation von $H_2$ und der Reduktion von $O_2$ gekoppelten Ströme umgekehrte Richtungen aufweisen. Die Lebensdauer eines solchen Sensors beträgt:

$$t = \frac{400 \cdot 1 \cdot 0{,}4}{0{,}5 \cdot 10^{-6} \cdot 3600} + \frac{0{,}08 \cdot 1}{0{,}5 \cdot 10^{-6}} = 89000 \text{ h} + 160000 \text{ h} = = 250000 \text{ h}$$

BEISPIEL 5

Ein erfindungsgemäßer Elektrolyt kann statt einer Säure auch eine Mischung von Säuren enthalten. Es wurde ein erfindungsgemäßer Zweielektrodensensor zur Bestimmung der Kohlenmonoxidkonzentration hergestellt und getestet. Der Festelektrolyt wurde aus einer Mischung von Methylmethacrylat als Monomer, Azo-bis(isobutyronitril) als Initiator und Trifluormethansulfonsäure und Phosphorsäure durch Polymerisation bei erhöhter Temperatur hergestellt. Ein solcher Elektrolyt hat eine sehr geringe Hygroskopizität, so daß er insbesondere für Sensoren mit porösen Diffusionsmembranen geeignet ist. Die zulässige Änderung des Gegenelektrodenpotentials beträgt für diesen Elektrolyten 0,2 V.

**Patentansprüche**

1. Elektrochemischer Sensor zur Bestimmung der Konzentration eines Gases, umfassend ein Gehäuse (1),

eine Meßelektrode (5), die ein katalytisch aktives Material enthält, welches eine Umsetzung des zu bestimmenden Gases herbeiführen kann,
eine Gegenelektrode (3), die ein Kohlenstoffmaterial enthält, und einen Elektrolyten, der mit Meß- und Gegenelektrode in Kontakt steht,

**dadurch gekennzeichnet,**
daß das Kohlenstoffmaterial in der Gegenelektrode eine spezifische Oberfläche von mindestens 40 $m^2$/g aufweist und elektrochemisch aktive Oberflächenverbindungen enthält, die reversibel oxidiert bzw. reduziert werden können.

**2.** Elektrochemischer Sensor nach Anspruch 1,
**dadurch gekennzeichnet,**
daß das Kohlenstoffmaterial in der Gegenelektrode eine spezifische Oberfläche von 1000 bis 3000 $m^2$/g aufweist.

**3.** Elektrochemischer Sensor nach Anspruch 1 oder 2,
**dadurch gekennzeichnet,**
daß das katalytisch aktive Material in der Meßelektrode aus der Gruppe, bestehend aus Platin, Kohlenstoff oder Gold, ausgewählt ist.

**4.** Elektrochemischer Sensor nach einem der Ansprüche 1 bis 3,
**dadurch gekennzeichnet,**
daß das Kohlenstoffmaterial in der Gegenelektrode eine poröse Aktivkohle mit sauerstoffhaltigen elektrochemisch aktiven Oberflächenverbindungen ist.

**5.** Elektrochemischer Sensor nach Anspruch 4,
**dadurch gekennzeichnet,**
daß die Oberflächenverbindungen des Kohlenstoffmaterials Substanzen des Hydrochinon-Chinon-Typs enthalten.

**6.** Elektrochemischer Sensor nach einem der Ansprüche 1 bis 5,
**dadurch gekennzeichnet,**
daß der Elektrolyt in eine feste Matrix eingebettet ist.

**7.** Elektrochemischer Sensor nach einem der Ansprüche 1 bis 6,
**dadurch gekennzeichnet,**
daß er von einem Gehäuse (1) umgeben ist, das Zutrittsöffnungen (9, 10) für das zu messende Gas in einen Gasraum (11) und Öffnungen für Elektrodenkontakte (2, 6) aufweist, wobei der Gasraum in Kontakt mit der Meßelektrode steht.

**8.** Elektrochemischer Sensor nach einem der Ansprüche 1 bis 7,
**dadurch gekennzeichnet,**
daß sich zwischen der Meß- und der Gegenelektrode ein für Ionen durchlässiger Separator (4) befindet.

**9.** Elektrochemischer Sensor nach einem der Ansprüche 7 oder 8,
**dadurch gekennzeichnet,**
daß sich zwischen dem Gasraum und der Meßelektrode eine gasdurchlässige Diffusionsmembran (7) befindet.

**10.** Elektrochemischer Sensor nach einem der Ansprüche 1 bis 9,
**dadurch gekennzeichnet**,
daß der Elektrolyt solche Ionen enthält, die bei der Gasionisation an der Meßelektrode entstehen.

**11.** Elektrochemischer Sensor nach einem der Ansprüche 1 bis 10,
**dadurch gekennzeichnet,**
daß er weiterhin eine Referenzelektrode enthält.

**12.** Elektrochemischer Sensor nach einem der Ansprüche 1-11,
**dadurch gekennzeichnet,**
daß er weiterhin eine Zusatzelektrode enthält.

**13.** Elektrochemischer Sensor nach einem der Ansprüche 1 bis 12,
**dadurch gekennzeichnet,**
daß er mehrere Meßelektroden enthält.

**14.** Elektrochemischer Sensor nach einem der vorhergehenden Ansprüche,
**dadurch gekennzeichnet,**
daß er als Elektrolyt einen Festelektrolyten enthält, der aus einem Polymerisat besteht, in dem eine Elektrolytlosung inkorporiert ist.

**15.** Elektrochemischer Sensor nach Anspruch 14,

**dadurch gekennzeichnet,**

daß der Festelektrolyt durch Polymerisation mindestens eines Monomeren, welches mit einem Flüssigelektrolyten vermischt ist, hergestellt wird.

**16.** Elektrochemischer Sensor nach Anspruch 15,
**dadurch gekennzeichnet,**
daß der Festelektrolyt durch Polymerisation einer Mischung von Methylmethacrylat als Monomer, Azo-bis(isobutyronitril) als Initiator und einer Säure oder einem Gemisch von Säuren hergestellt wird.

**17.** Elektrochemischer Sensor nach Anspruch 16,
**dadurch gekennzeichnet,**
daß die Säure Schwefelsäure, Trifluormethansulfonsäure, Phosphorsäure oder ein Gemisch davon ist.

**18.** Verfahren zur Bestimmung der Konzentration eines oder mehrerer Gase,
**dadurch gekennzeichnet,**
daß man einen elektrochemischen Sensor nach einem der Ansprüche 1 bis 13 verwendet.

**19.** Verfahren nach Anspruch 18,
**dadurch gekennzeichnet,**
daß man ein Gas, ausgewählt aus der Gruppe, bestehend aus Wasserstoff, Sauerstoff, Kohlenmonoxid und Silan, bestimmt.

**20.** Verfahren nach einem der Ansprüche 18 oder 19,
**dadurch gekennzeichnet,**
daß man den elektrochemischen Sensor an einen äußeren Leitkreis anschließt, zwischen den Elektroden des Sensors ein geeignetes äußeres Potential einstellt und den zur Konzentration des zu bestimmenden Gases proportionalen Stromfluß im äußeren Leitkreis mißt.

**21.** Verfahren nach Anspruch 20,
**dadurch gekennzeichnet,**
daß man Wasserstoff bestimmt, wobei man einen Sensor verwendet, der eine Meßelektrode aus Platin, eine Gegenelektrode aus Aktivkohle mit einer spezifischen Oberfläche von 1000 bis 1700 $m^2$/g und einen Elektrolyten auf Basis einer starken Mineralsäure enthält, wobei man ein äußeres Potential von etwa 0,3 V einstellt.

**22.** Verfahren nach einem der Ansprüche 18 bis 21,
**dadurch gekennzeichnet,**
daß man den Sensor nach einer vorbestimmten Betriebsdauer durch Umkehrung der Elektrodenpolarisierung unter Anlegen einer äußeren Spannung wieder regeneriert.

**Claims**

1. An electrochemical sensor for determining the concentration of a gas, comprising a housing (1), a measuring electrode (5) which contains a catalytically active material which can induce a reaction of the gas to be determined, a counter electrode (3) which contains a carbon material, and an electrolyte which is in contact with the measuring electrode and the counter electrode, characterised in that the carbon material in the counter electrode has a specific surface area of at least 40 $m^2$/g and contains electrochemically active surface compounds which can be reversibly oxidised and/or reduced.

2. An electrochemical sensor according to Claim 1, characterised in that the carbon material in the counter electrode has a specific surface area of 1000 to 3000 $m^2$/g.

3. An electrochemical sensor according to Claim 1 or 2, characterised in that the catalytically active material in the measuring electrode is selected from the group comprising platinum, carbon or gold.

4. An electrochemical sensor according to any one of Claims 1 to 3, characterised in that the carbon material in the counter electrode is porous activated carbon with oxygen-containing electrochemically active surface compounds.

5. An electrochemical sensor according to Claim 4, characterised in that the surface compounds of the carbon material contain substances of hydroquinone-quinone type.

6. An electrochemical sensor according to any one of Claims 1 to 5, characterised in that the electrolyte is embedded in a solid matrix.

7. An electrochemical sensor according to any one of Claims 1 to 6, characterised in that it is surrounded by a housing which has inlet openings (9,10) for the gas to be measured into a gas chamber (11) and openings for electrode contacts (2,6), the gas chamber being in contact with the measuring electrode.

8. An electrochemical sensor according to any one of Claims 1 to 7, characterised in that an ion-permeable separator (4) is disposed between the measuring electrode and the counter electrode.

9. An electrochemical sensor according to either Claim 7 or Claim 8, characterised in that a gas-permeable diffusion membrane (7) is disposed between the gas chamber and the measuring electrode.

10. An electrochemical sensor according to any one of Claims 1 to 9, characterised in that the electrolyte contains ions of the type which are formed at the measuring electrode during the gas ionisation.

11. An electrochemical sensor according to any one of Claims 1 to 10, characterised in that it also contains a reference electrode.

12. An electrochemical sensor according to any one of Claims 1 to 11, characterised in that it also contains an additional electrode.

13. An electrochemical sensor according to any one of Claims 1 to 12, characterised in that it contains a plurality of measuring electrodes.

14. An electrochemical sensor according to any one of the preceding Claims, characterised in that as electrolyte it contains a solid electrolyte which consists of a polymer, which incorporates an electrolyte solution.

15. An electrochemical sensor according to Claim 14, characterised in that the solid electrolyte is produced by polymerisation of at least one monomer which is mixed with a liquid electrolyte.

16. An electrochemical sensor according to Claim 15, characterised in that the solid electrolyte is produced by polymerisation of a mixture of methyl methacrylate as monomer, azo-bis(isobutryonitrile) as initiator, and an acid or a mixture of acids.

17. An electrochemical sensor according to Claim 16, characterised in that the acid is sulphuric acid, trifluoro methane sulphonic acid, phosphoric acid or a mixture thereof.

18. A method of determining the concentration of one or more gases, characterised in that an electrochemical sensor according to any one of Claims 1 to 13 is used.

19. A method according to Claim 18, characterised in that a gas is determined, selected from the group comprising hydrogen, oxygen, carbon monoxide and silane,

20. A method according to either Claim 18 or 19, characterised in that the electrochemical sensor is connected to an external electric circuit, a suitable outer potential is adjusted between the sensor electrodes, and the current flow in the external electric circuit proportional to the concentration of the gas to be determined is measured.

21. A method according to Claim 20, characterised in that hydrogen is determined, wherein a sensor is used which contains a measuring electrode of platinum, a counter electrode of activated carbon with a specific surface area of 1000 to 1700 $m^2$/g and an electrolyte based on a strong mineral acid, an outer potential of approximately 0.3 V being set.

22. A method according to any one of Claims 18 to 21, characterised in that, after a predetermined operating time, the sensor is regenerated by reversing the electrode polarisation by applying an external voltage.

**Revendications**

1. Détecteur électrochimique pour la détermination de la concentration d'un gaz comprenant un boîtier (1), une électrode de mesure (5) contenant une matière catalytiquement active qui est susceptible de provoquer une réaction du gaz à doser, une contre-électrode (3) contenant une matière carbonée et un électrolyte qui se trouve en contact avec l'électrode de mesure et la contre-électrode, caractérisé en ce que la matière carbonée dans la contre-électrode présente une aire spécifique d'au moins 40 m$^2$/g et contient des composés en surface électrochimiquement actifs qui peuvent être oxydés, respectivt. réduits de façon réversible.

2. Détecteur électrochimique selon la revendication 1, caractérisé en ce que la matière carbonée dans la contre-électrode présente une aire spécifique de 1000 à 3000 m$^2$/g.

3. Détecteur électrochimique selon la revendication 1 ou 2, caractérisé en ce que la matière catalytiquement active dans l'électrode de mesure est choisie dans le groupe consistant en platine, carbone ou or.

4. Détecteur électrochimique selon l'une des revendications 1 à 3, caractérisé en ce que la matière carbonée dans la contre-électrode est un charbon actif poreux avec des composés en surface oxygénés électrochimiquement actifs.

5. Détecteur électrochimique selon la revendication 4, caractérisé en ce que les composés en surface de la matière carbonée contiennent des substances du type hydroquinone-quinone.

6. Détecteur électrochimique selon l'une des revendications 1 à 5, caractérisé en ce que l'électrolyte est incorpré dans une matrice solide.

7. Détecteur électrochimique selon l'une des revendications 1 à 6, caractérisé en ce qu'il est entouré d'une enveloppe (1) comportant des orifices d'admission (9, 10) pour le gaz à doser dans un compartiment à gaz (11) et des orifices pour les connexions d'électrode (2, 6), moyennant quoi le compartiment à gaz se trouve en contact avec l'électrode de mesure.

8. Détecteur électrochimique selon l'une des revendications 1 à 7, caractérisé en ce qu'un séparateur (4) perméable aux ions se trouve entre l'électrode de mesure et la contre-électrode.

9. Détecteur électrochimique selon l'une des revendications 7 ou 8, caractérisé en ce qu'une membrane de diffusion (7) perméable aux gaz se trouve entre le compartiment à gaz et l'électrode de mesure.

10. Détecteur électrochimique selon l'une des revendications 2 à 9, caractérisé en ce que l'électrolyte contient des ions qui se forment lors de l'ionisation du gaz à l'électrode de mesure.

11. Détecteur électrochimique selon l'une des revendications 1 à 10, caractérisé en ce qu'il comporte en outre une électrode de référence.

12. Détecteur électrochimique selon l'une des revendications 1 à 11, caractérisé en ce qu'il comporte en outre une électrode auxiliaire.

13. Détecteur électrochimique selon l'une des revendications 1 à 12, caractérisé en ce qu'il comporte plusieurs électrodes de mesure.

14. Détecteur électrochimique selon l'une des revendications précédentes, caractérisé en ce qu'il contient en tant qu'électrolyte un électrolyte solide constitué par un polymère dans lequel est incorporée une solution d'électrolyte.

15. Détecteur électrochimique selon la revendication 14, caractérisé en ce que l'électrolyte solide est préparé par polymérisation d'au moins un monomère qui est mélangé avec un électrolyte liquide.

16. Détecteur électrochimique selon la revendication 15, caractérisé en ce que l'électrolyte solide est préparé par polymérisation d'un mélange de méthacrylate de méthyle en tant que monomère, d'azo-bis(isobutyronitrile) en tant qu'amorceur et d'un acide ou d'un mélange d'acides.

**17.** Détecteur électrochimique selon la revendication 16, caractérisé en ce que l'acide est l'acide sulfurique, l'acide trifluorométhanesulfonique, l'acide phosphorique ou un mélange de ceux-ci.

**18.** Procédé pour la détermination de la concentration d'un ou de plusieurs gaz, caractérisé en ce qu'on utilise un détecteur électrochimique selon l'une des revendications 1 à 13.

**19.** Procédé selon la revendication 18, caractérisé en ce que l'on dose un gaz choisi dans le groupe consistant en hydrogène, oxygène, monoxyde de carbone et silane.

**20.** Procédé selon l'une des revendications 18 ou 19, caractérisé en ce que l'on raccorde le détecteur électrochimique à un circuit extérieur, établit entre les électrodes du détecteur un potentiel extérieur approprié et mesure dans le circuit extérieur le courant proportionnel à la concentration du gaz à doser.

**21.** Procédé selon la revendication 20, caractérisé en ce que l'on dose l'hydrogène en utilisant un détecteur qui contient une électrode de mesure en platine, une contre-électrode en charbon actif ayant une aire spécifique de 1000 à 1700 m$^2$/g et un électrolyte à base d'un acide minéral fort, moyennant quoi il s'établit un potentiel extérieur d'environ 0,3 V.

**22.** Procédé selon l'une des revendications 18 à 21, caractérisé en ce que l'on régénère à nouveau le détecteur après une durée de fonctionnement prédéterminée par inversion de la polarisation des électrodes en appliquant une tension extérieure.

# Fig. 1

# Fig. 2